Europäisches Patentamt

European Patent Office

Office européen des brevets

(19)

(11) Veröffentlichungsnummer : **0 092 666**
**B1**

(12) **EUROPÄISCHE PATENTSCHRIFT**

(45) Veröffentlichungstag der Patentschrift :
**11.10.89**

(51) Int. Cl.⁴ : **G 11 B 23/02**

(21) Anmeldenummer : **83102342.9**

(22) Anmeldetag : **10.03.83**

(54) **Magnetbandkassettenbehälter.**

**Teilanmeldung 84100818 eingereicht am 26.01.84.**

(30) Priorität : **28.04.82 DE 3215721**

(43) Veröffentlichungstag der Anmeldung :
**02.11.83 Patentblatt 83/44**

(45) Bekanntmachung des Hinweises auf die Patenterteilung : **11.10.89 Patentblatt 89/41**

(84) Benannte Vertragsstaaten :
**AT BE CH DE FR GB IT LI LU NL SE**

(56) Entgegenhaltungen :
**EP--A-- 0 086 275**
**EP--A-- 0 223 940**
**DE--A-- 2 228 533**
**DE--A-- 3 015 749**
**DE--A-- 3 034 369**
**DE--B-- 2 248 408**
**FR--A-- 2 297 478**
**US--A-- 3 275 158**
**US--A-- 3 603 478**

(73) Patentinhaber : **idn inventions and development of novelties ag**
**Hartbertstrasse 9**
**CH-7002 Chur (CH)**

(72) Erfinder : **Ackeret, Peter**
**Allmendstrasse 18**
**CH-8700 Küsnacht (CH)**

(74) Vertreter : **Dipl.-Ing. H. Marsch Dipl.-Ing. K. Sparing Dipl.-Phys.Dr. W.H. Röhl Patentanwälte**
**Rethelstrasse 123**
**D-4000 Düsseldorf 1 (DE)**

**Beschreibung**

Die Erfindung betrifft einen Behälter für Magnetbandkassetten.

Behälter für Magnetbandkassetten sind vielfach vorbekannt. Ein unter der Bezeichnung « cbox » marktgängiger Behälter ist in der DE-C-22 48 408 offenbart. Er umfaßt ein Gehäuse mit einer frontseitigen Öffnung, durch die ein Transportorgan für eine Kassette hindurch beweglich ist. In der eingeschobenen Position des Schiebers deckt dessen Frontwand die Gehäuseöffnung ab. Eine Ausschubfederanordnung spannt den Schieber in seine äußere Endlage vor, und eine Verriegelungsanordnung hält den eingeschobenen Schieber gegen die Vorspannung der Ausschubfeder im Gehäuse ; die Verriegelungsanordnung ist manuell entriegelbar.

Diese Merkmale sind auch bei dem Behälter gemäß vorliegender Erfindung vorgesehen.

Bei einer weiteren, aus der FR-A-2 297 478 bekannten Behälterbauart ist relativ zu einem Gehäuse ein Schieber beweglich, dessen Frontwand relativ zu einem Führungsabschnitt des Schiebers abklappbar ist. Eine solche Variante kann auch bei dem Behälter gemäß der vorliegenden Erfindung vorgesehen sein.

Insbesondere dann, wenn ein Behälter Platz für eine Mehrzahl von Kassetten bietet, ist es erwünscht feststellen zu können, welche Plätze belegt und welche frei sind. Ein Kassettenbehälter, der ein derartiges System aufweist, ist aus der US-A-3, 603, 478 bekannt.

Der Behälter umfaßt ein durch Rippen in Fächer für je eine Kassette unterteiltes Gehäuse aus Kunststoff. Jedes Fach ist durch einen zugeordneten Klappdeckel verschließbar. Eine aus dem Deckel ausgeformte Zunge trägt eine tastbare Warze. Befindet sich in einem Fach eine Kassette, so wird diese von einer aus der Rückwand des Behälters ausgeformten zweiten Zunge gegen die Gehäuseöffnung gedrückt. Wird nun der Deckel hochgeklappt, kann die Tastzunge etwas nach außen verbogen werden. Der Benutzer kann solche nach außen verformte Zungen abtasten um festzustellen, welche Fächer belegt sind. Diese Bauart ist für die optische Anzeige des Belegungszustands weniger geeignet, weil die Anzeige in der wichtigsten, nämlich der frontseitigen Blickrichtung, kaum einen Unterschied zwischen leeren und belegten Fächern erkennen läßt. Darüberhinaus ist es geboten, einen speziellen, teuren Kunststoff zu verwenden, der auch unter Dauerlast elastisch bleibt, also keine Kaltflußeigenschaft hat, weil sonst nach kurzer Zeit die Belegungsanzeige versagt.

Aufgabe der Erfindung ist es, einen Magnetbandkassettenbehälter zu schaffen, der bequem bedienbar ist und insbesondere auch eine eindeutige optische Belegungsanzeige aufweist.

Diese Aufgabe wird durch die im Patentanspruch 1 angegebene Merkmalskombination gelöst ; die Unteransprüche definieren zweckmäßige Weiterbildungen des der Erfindung zugrundeliegenden Konzepts.

Andere Lösungen sind in der Patentanmeldung 89100214.9 offenbart, die gemäß Regel 25 (2) aus der Ursprungsanmeldung ausgeschieden worden ist, auf die auch die vorliegende Anmeldung zurückgeht.

Ein Ausführungsbeispiel des Gegenstandes der Erfindung ist in den beigefügten Zeichnungen ausschnittweise dargestellt und wird nachstehend unter Bezugnahme auf diese näher erläutert.

Fig. 1 zeigt den unteren, vorderen Bereich eines Transportorgans, das hier als ein Schieber mit abklappbarer Frontwand ausgebildet ist, in der Ansicht von innen,

Fig. 2 ist ein Schnitt etwa in der Ebene 47-47, die in Fig. 1 markiert ist,

Fig. 3 ist eine Schnittdarstellung in der Ebene 46-46, die in den Fig. 1 und 2 markiert ist, und

Fig. 4 stellt perspektivisch den Anzeigeschieber dar.

Das Gehäuse und die Ausschubfederanordnung sind in der Zeichnung nicht dargestellt ; insoweit ist auf die eingangs genannten Druckschriften zu verweisen.

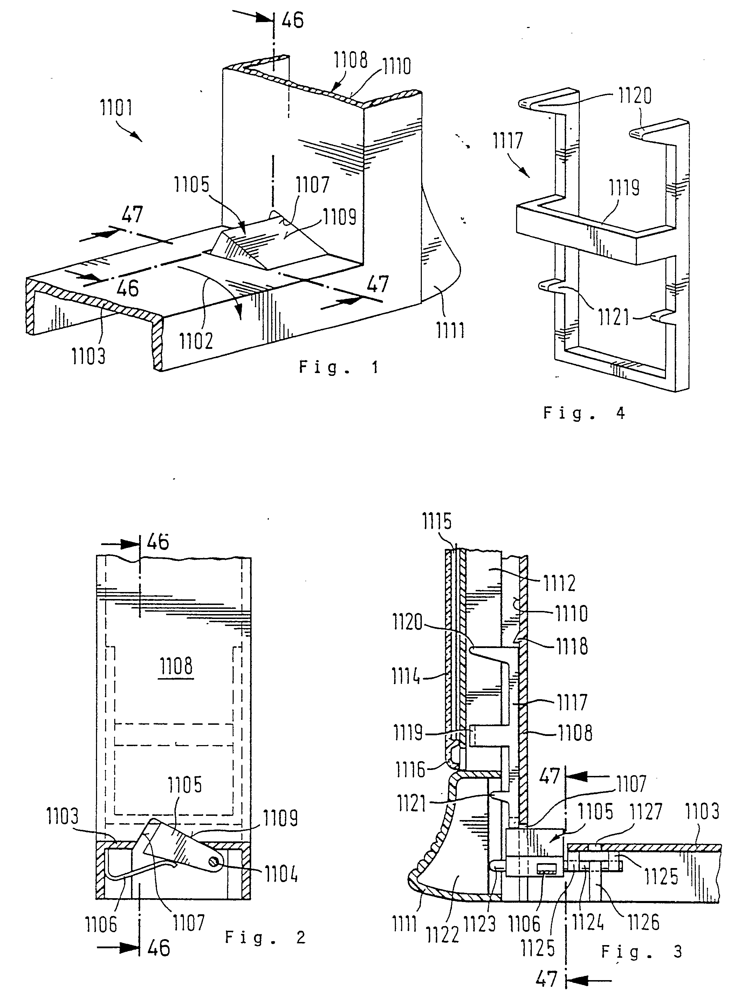

Die Frontwand des Transportorgans, hier ein Schieberdeckel 1101, wird zum Verschließen des Behälters in Richtung des Pfeiles 1102 geschwenkt. In der Sohle 1103 des Deckels ist um ein Zapfenlager 1104 schwenkbar ein Steuerhebel 1105 gelagert, der von einer weichen Blattfeder 1106 in die in Fig. 1 bis 3 dargestellte Position gedrückt wird, in der er in der Ausnehmung 1107 eines Deckelholmes 1108 anschlägt. Wenn der Behälter eine Kassette enthält, trifft die Keilfläche 1109 beim Schwenken in Pfeilrichtung auf eine Kasettenkante und wird gegen die Federvorspannung ausgelenkt.

Auf der dem Behälterinnenraum abgewandten Seite der Wandung 1110 des Holms 1108 befindet sich eine Auslösetaste 1111 mit einer parallel zum Schieberholm 1108 verlaufenden, in diesem gleitbeweglich geführten und U-förmigen Querschnitt aufweisenden Verlängerung 1112, wobei die U-Schenkel dem Holm zugewandt liegen. Vor der U-Basis befindet sich ein transparentes Fenster 1114 mit einem oberen Etikettenaufnahmeraum 1115 und einem unteren Anzeigefenster 1116.

In dem vom U-Querschnitt der Tastenverlängerung begrenzten Raum ist ein Reiter 1117 eingesetzt, der in Fig. 4 perspektivisch dargestellt ist. Er ist gleitbeweglich zwischen einem oberen, an den Schieberholm angeformten Anschlag 1118 und dem Steuerhebel 1105 gefangen, auf dem er « reitet » ; wird der Steuerhebel, wie beschrieben, nach unten ausgelenkt, folgt der Reiter 1117 unter Schwerkraftwirkung, und sein Signalstreifen 1119 wird hinter dem Anzeigefenster 1116 sichtbar. Der Reiter 1117 ist lose geführt mittels seiner Arme 1120 in dem U-Querschnitt der Tastenverlängerung und mittels kürzerer Arme 1121 an Rippen 1122, die innen an die Taste angeformt sind. An einer solchen Rippe 1122 stützt sich auch das dem Behälterinnern abgewandte Ende 1123 des Lagerzapfens 1124 des Steuerhebels 1105 ab. Das Lager 1104 wird von zwei an die Sohle 1103 des Deckels angeformten Lagerhalbschalen 1125 und einer unteren Lagerhalbschale 1126 gebildet, die sich — bei Fertigung der Teile aus Kunststoff im Spritzgußverfahren — durch eine freibleibende Öffnung 1127 entformen läßt.

Wird der Steuerhebel 1105 von der Kassette nach unten gedrückt, folgt der Reiter 1117 unter Wirkung der Schwerkraft. Sein Signalstreifen ist durch das Anzeigefenster 1116 hindurch dann sichtbar.

Will man wegen der Reibungsverhältnisse oder, um den Behälter auch in anderer Lage benutzen zu können, sich bei der Bewegung des Reiters nicht auf die Schwerkraft verlassen, kann man den Steuerhebel zweiarmig ausbilden und den Reiter auf dem der Keilfläche abgewandten Hebelarm aufsitzen lassen und einer abwärts gerichteten Federvorspannung unterwerfen. Diese Feder hält dann nicht nur den Reiter ständig in Anlage am Steuerhebel, sondern spannt diesen auch in die Leeranzeigestellung vor, so daß keine zusätzliche Feder mehr dafür benötigt wird. Der Signalstreifen zeigt dann natürlich an, daß der Behälter leer ist, weil der Reiter bei Auflaufen der Steuerhebel-Keilfläche auf eine Kassette nicht abgesenkt, sondern gehoben wird.

## Patentansprüche

1. Behälter für Magnetbandkassetten mit einem Gehäuse und mindestens einem Transportorgan für je eine Kassette, das mittels einer Ausschubfederanordnung aus dem Gehäuse durch eine frontseitige Gehäuseöffnung herausförderbar, gegen die Federvorspannung im Gehäuse verriegelbar und manuell entriegelbar ist sowie eine Frontwand (1101) aufweist, die in der verriegelten Position die Gehäuseöffnung abdeckt, sowie mit einer frontseitigen Anzeigeanordnung für die Belegung jedes Transportorgans, wobei jede Anzeigeanordnung umfaßt :

(a) ein von Wandungsteilen umgebenes Fenster (1116),

(b) einen parallel zur Frontwand verschieblich gelagerten Anzeigeschieber (1117) mit einem Signalabschnitt (1119), der gegen die Wandungsteile optisch kontrastiert und in einer ersten Anzeigeposition in dem Fenster erscheint, während er in einer zweiten Anzeigeposition aus dem Fenster hinter die Wandungsteile verschwindet,

(c) einen mit dem Anzeigeschieber in Wirkverbindung stehenden Steuerhebel (1105), der von einer Feder (1106) in eine erste Endlage vorgespannt ist, in der er mit einer Schrägfläche in den für die Kassette bestimmten Raum des Transportorgans ragt und den Signalabschnitt in eine seiner Anzeigepositionen steuert, und aus der er in eine zweite Endlage gegen die Federvorspannung verlagert wird, in der er den Signalabschnitt in die andere seiner Anzeigepositionen umsteuert.

2. Behälter nach Anspruch 1, dadurch gekennzeichnet, daß der Steuerhebel ein separates, vom Anzeigeschieber getrenntes und mit diesem gekoppeltes Bauteil bildet.

3. Behälter nach Anspruch 1 oder 2, dadurch gekennzeichnet, daß die Frontwand (1101) mit dem Transportorgan gelenkig verbunden ist und der Steuerhebel in der Frontwand gelagert ist.

4. Behälter nach Anspruch 3, dadurch gekennzeichnet, daß der Steuerhebel beim Verschwenken der Frontwand in bzw. außer Abtastkontakt mit einer in das Transportorgan eingeführten Kassette gelangt.

5. Behälter nach einem der vorangehenden Ansprüche, dadurch gekennzeichnet, daß die Frontwand einen Hohlraum umschließt, in dem der Anzeigeschieber geführt ist.

6. Behälter nach einem der vorangehenden Ansprüche, gekennzeichnet durch eine Fensterabdeckung (1114, 1116) aus transparentem Kunststoff.

7. Behälter nach einem der vorangehenden Ansprüche, dadurch gekennzeichnet, daß mindestens eine der Endlagen des Steuerhebels durch einen Anschlag (1107) definiert ist.

8. Behälter nach einem der vorangehenden Ansprüche, dadurch gekennzeichnet, daß mindestens eine der Anzeigepositionen des Anzeigeschiebers (1117) durch einen Anschlag (1118) definiert ist.

9. Behälter nach einem der vorangehenden Ansprüche, dadurch gekennzeichnet, daß die Feder (1106) als separates Bauteil in den aus Kunststoff bestehenden Behälter eingefügt ist.

## Claims

1. Container for magnetic tape cassettes having a housing and at least one transporter for each cassette which by means of an ejector spring arrangement can be conveyed out of the housing through an opening in the front of the housing, can be locked in the housing against the spring bias and unlocked manually, and has a front wall (1101) which in the locked position covers the opening in the housing, and also having an arrangement at the front for indicating whether each transporter is loaded, each indicating arrangement comprising :

(a) a window (1116) surrounded by wall portions,

(b) an indicator slider (1117) mounted so as to be movable parallel to the front wall and having a signal section (1119) which is optically contrasted with respect to the wall portions and in a first indicating position appears in the window, while in a second indicating position it disappears from the window, behind the wall portions,

(c) a control lever (1105) which is in operative connection with the indicator slider and is biased by a spring (1106) into a first end position, in which it projects with an inclined surface into the space in the transporter intended for the cassette and directs the signal section into one of its indicating positions, and from which it is moved, against the spring bias, into a second end position, in which it moves the signal section over into the other of its indicating positions.

2. Container according to Claim 1, characterised in that the control lever forms a separate component, distinct from the indicator slider and coupled to the latter.

3. Container according to Claim 1 or 2, characterised in that the front wall (1101) is connected to the transporter in an articulated manner and the control lever is mounted in the front wall.

4. Container according to Claim 3, characterised in that when the front wall is pivoted the control lever comes, as the case may be, into or out of sensing contact with a cassette introduced into the transporter.

5. Container according to one of the preceding Claims, characterised in that the front wall encloses a hollow space in which the indicator slider is guided.

6. Container according to one of the preceding Claims, characterised by a window covering (1114, 1116) of transparent plastics material.

7. Container according to one of the preceding Claims, characterised in that at least, one of the end positions of the control lever is defined by means of a stop member (1107)

8. Container according to one of the preceding Claims, characterised in that at least one of the indicating positions of the indicator slider (1117) is defined by means of a stop member (1118).

9. Container according to one of the preceding Claims, characterised in that the spring (1106) is inserted as a separate component into the container, which container consists of plastics material.

**Revendications**

1. Réceptacle de cassettes à bandes magnétiques comportant un boîtier et au moins un organe de transport pour une cassette pour chacun d'eux qui peut être extraite du boîtier grâce à un dispositif élastique d'éjection, et qui est verrouillable dans le boîtier, à l'encontre d'une sollicitation élastique, et déverrouillable manuellement et qui en outre présente une paroi frontale (1101) qui, dans la position verrouillée, recouvre l'ouverture de boîtier, et qui comporte de plus un dispositif d'affichage en face frontale pour recouvrir chaque organe de transport, le dispositif d'affichage comprenant :

(a) une fenêtre (1116) entourée par des parties de paroi,

(b) un coulisseau d'affichage (1117) logé en coulissement parallèlement à la paroi frontale comportant une partie de signalisation (1119) en contraste optique avec les parties de paroi et qui apparaît dans la fenêtre dans une première position d'affichage alors qu'elle disparaît hors de la fenêtre derrière les parties de paroi dans une deuxième position d'affichage,

(c) un levier de manoeuvre (1105) qui coopère avec le coulisseau d'affichage et qui est présollicité par un ressort (1106) dans une première position extrême dans laquelle il fait saillie à l'aide d'une surface oblique dans le volume de l'organe de transport réservé à la cassette et amène la partie de signalisation dans l'une de ses positions d'affichage, et à partir de laquelle il est déplacé à l'encontre de la sollicitation élastique dans la deuxième position extrême, dans laquelle il commute la partie de signalisation dans l'autre de ses positions d'affichage.

2. Réceptacle selon la revendication 1, caractérisé en ce que le levier de manoeuvre constitue un composant distinct, séparé du coulisseau d'affichage et couplé avec ce dernier.

3. Réceptacle selon la revendication 1 ou 2, caractérisé en ce que la paroi frontale (1101) est reliée de façon articulée avec l'organe de transport et en ce que le levier de manoeuvre est logé dans la paroi frontale.

4. Réceptacle selon la revendication 3, caractérisé en ce que le levier de manoeuvre, par basculement de la paroi frontale, vient en contact avec une cassette introduite dans l'organe de transport ou en est écarté.

5. Réceptacle selon l'une des revendications précédentes, caractérisé en ce que la paroi frontale comprend un espace vide, dans lequel est guidé le coulisseau d'affichage.

6. Réceptacle selon l'une des revendications précédentes, caractérisé par un couvercle de fenêtre (1114, 1116) en matière plastique transparente.

7. Réceptacle selon l'une des revendications précédentes caractérisé en ce qu'au moins l'une des positions extrêmes du levier de manoeuvre est définie par une butée (1107).

8. Réceptacle selon l'une des revendications précédentes, caractérisé en ce qu'au moins l'une des positions d'affichage du coulisseau d'affichage (1117) est définie par une butée (1118).

9. Réceptacle selon l'une des revendications précédentes, caractérisé en ce que le ressort (1106) est introduit en tant que composant distinct dans le réceptacle en matière plastique.

Fig. 1

Fig. 4

Fig. 2

Fig. 3